# EUROPEAN PATENT SPECIFICATION

(11) **EP 2 081 392 B1**
(45) Date of publication and mention of the grant of the patent: **24.09.2014**
(21) Application number: 06823185.1
(22) Date of filing: 08.11.2006
(51) Int. Cl.: H04W 36/00

(54) **BASE STATION APPARATUS, USER EQUIPMENT AND METHOD USED IN MOBILE COMMUNICATION SYSTEM PERFORMING INTER-BAND HANDOVER**
BASISSTATIONSVORRICHTUNG, BENUTZERGERÄTE UND VERFAHREN IN EINEM MOBILKOMMUNIKATIONSSYSTEM ZUR DURCHFÜHRUNG EINES HANDOVER ZWISCHEN BÄNDERN
APPAREIL DE STATION DE BASE, ÉQUIPEMENT UTILISATEUR ET PROCÉDÉ UTILISÉ DANS UN SYSTÈME DE COMMUNICATION MOBILE EFFECTUANT UN TRANSFERT INTERBANDE

(43) Date of publication of application: 22.07.2009
(73) Proprietor: Fujitsu Limited, Kawasaki-shi, Kanagawa 211-8588 (JP)
(72) Inventor: HASEGAWA, Hajime, Kawasaki-shi Kanagawa 211-8588 (JP)
(74) Representative: Ward, James Norman
(86) International application number: PCT/JP2006/322281
(87) International publication number: WO 2008/056411

(56) References cited:
- EP-A2- 0 881 852
- JP-A- 2004 015 413
- JP-A- 2006 173 861
- JP-A- 2006 510 279
- US-A1- 2006 126 564
- CHINA MOBILE: "Requirements on roaming among different bandwidths LTE systems", 3GPP DRAFT; R1-050823, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. London, UK; 20050825, 25 August 2005 (2005-08-25), XP050100453, [retrieved on 2005-08-25]
- ERICSSON ET AL: "Text Proposal on Cell Search in Evolved UTRA", 3GPP DRAFT; R1-051308 JTP CELL SEARCH, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. Seoul, Korea; 20051101, 1 November 2005 (2005-11-01), XP050100913, [retrieved on 2005-11-01]

## Description

### FIELD

The present invention generally relates to the technical field of mobile communications, and more particularly to a base station apparatus, user equipment, and a method used in a mobile communications system performing handover between bandwidths.

### BACKGROUND

In this type of technical field, research and development regarding next-generation mobile communication systems are being rapidly conducted. Among currently anticipated communications system, the use of an OFDM (Orthogonal Frequency Division Multiplexing) method for a downlink is highly anticipated from the aspect of, for example, increasing speed/capacity and strengthening multipath resistance. Further, the use of a SC-FDMA (Single-Carrier Frequency Division Multiple Access) method for an uplink is highly anticipated from the aspect of, for example, broadening coverage while controlling PAPR (Peak-to-Average Power Ratio).

In the above-described next-generation mobile communications systems, the wireless resources are assigned in both uplinks and downlinks in the form of shared channels among users according to the communication statuses of each user. The process of determining what to allocate is referred to as scheduling. In order to appropriately perform scheduling of the uplink, each user equipment transmits a pilot channel to a base station, so that the base station determines the channel status of the uplink according to its reception quality. Further, in order to perform scheduling of the downlink, a base station transmits a pilot channel to user equipment, the user equipment reports information indicating the channel status (CQI: Channel Quality Indicator) based on the reception quality of the pilot channel. The base station performs scheduling of the downlink by determining the channel status of the downlink of a mobile station based on the CQI reported from each user equipment.

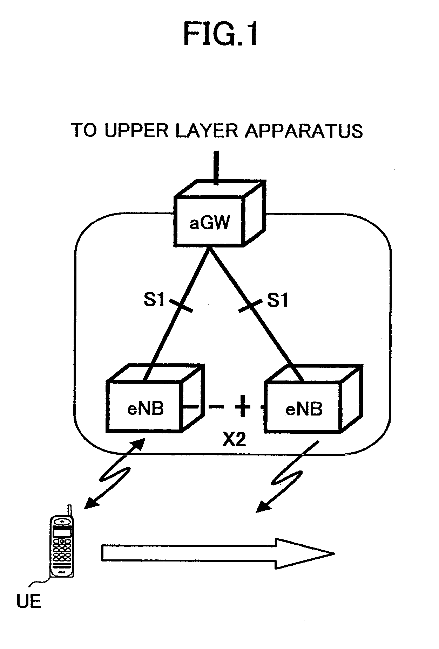

Fig. 1 illustrates a schematic diagram of this kind of mobile communications system. This system includes an access gateway aGW connected to an upper layer apparatus, base stations eNB connected to the access gateway aGW, and user equipment UE performing wireless communications with the base stations eNB. S1 represents an interface between the access gateway aGW and the base stations eNB. X2 represents an interface between the base stations eNB. The user equipment UE can switch cells while continuing communication by performing handover (HO). Unlike before, with this mobile communications system, plural choices of wide and narrow communication bandwidths are prepared. Communications are performed according to a selected one of any of the bandwidths depending on the communication capability or available resource status of both the user equipment UE and the base stations eNB.

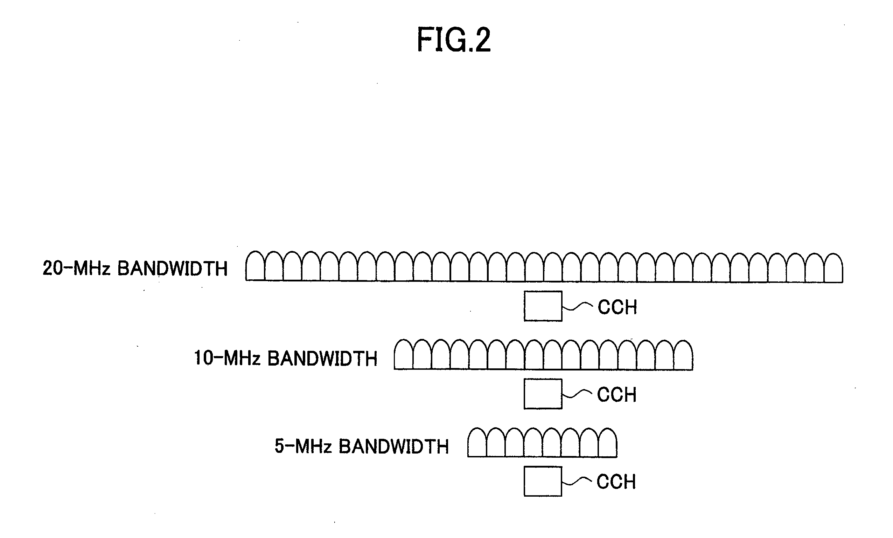

Fig. 2 is a diagram schematically illustrating where three communication bandwidths are prepared for a system. In the exemplarily illustrated system, communications are performed with communication frequency bandwidths of 20 MHz, 10 MHz, or 5 MHz. In the drawing, "CCH" represents a bandwidth occupied by a common control signal. The CCH contains general information related to all user equipment existing in a cell. A channel for individual control signals is used for control information dedicated for each user equipment (not illustrated in Fig. 2).

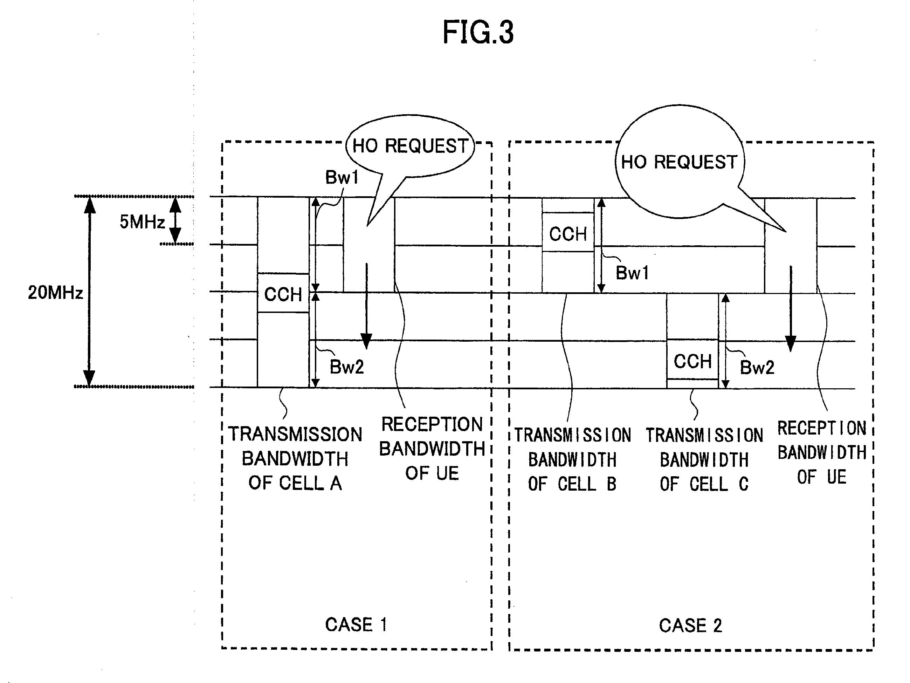

In case 1 illustrated in Fig. 3 where the transmission bandwidth of cell A is 20 MHz and the reception bandwidth of the user equipment existing in the cell A is 10 MHz, the user equipment UE performs communications by using the 10 MHz bandwidth indicated as Bw1. Because not only the Bw1 of 10 MHz but also Bw2 of 10 MHz is supported in cell A, the user equipment UE may be able to perform communication with better quality by changing the bandwidth from Bw1 to Bw2 depending on, for example, communication status. In order to determine such possibility, the user equipment, which is communicating with Bw1, is required to receive a channel measurement signal from the common control signal CCH transmitted in the other bandwidth Bw2 and determine whether to change bandwidth (handover between bandwidths) depending on whether its reception quality is good or bad. In the illustrated example, because the common control signal CCH is transmitted in a bandwidth including the border between Bw1 and Bw2, the user equipment UE communicating in Bw1 is able to obtain frequency information of the channel measurement signal in Bw2 from the CCH and perform measurement of a desired channel. This type of mobile communications system is disclosed in, for example, Non-patent documents 1 and 2.

In case 2 illustrated in Fig. 3 where the transmission bandwidth of cells B and C is 10 MHz and the reception bandwidth of the user equipment UE existing in cell B is also 10 MHz, the user equipment UE performs communications by using the 10 MHz bandwidth indicated as Bw1. The cell C uses the bandwidth of Bw2. The same as case 1, the user equipment UE may be able to perform communication with better quality by changing the bandwidth from Bw1 to Bw2 depending on, for example, communication status. Likewise, in order to determine such possibility, the user equipment, which is communicating with Bw1, is required to receive a channel measurement signal from the common control signal CCH transmitted in the other bandwidth Bw2 and determine whether to change bandwidth (handover between bandwidths) depending on whether its reception quality is good or bad. However, unlike case 1, the user equipment UE in case 2 cannot obtain frequency information of the channel measurement signal in Bw2 from the CCH in Bw1 during communications. If the frequency information of the channel measurement signal in Bw2 is unknown, the user equipment UE may not be able to promptly perform handover between bandwidths.

In this case, if the frequency information of the channel measurement signals of all peripheral cells are reported by broadcast signals (BCH) in the current cell, the user equipment UE can always receive necessary information, promptly tune to the frequency, and perform channel measurement of its transfer destination cell. However, wireless resources for broadcast signals are comparatively few. Thus, it may be difficult to cover the information of channel measurement signals of all peripheral cells with the broadcast signals. Since the number of peripheral cells tends to increase as cell radius is shortened, there is a possibility of graver problems.

The cell of the handover destination does not always belong in the same system. In future mobile communications systems, it is possible that different systems will coexist in the same area. It is possible that services will be provided by different operators and different vendors in a neighboring cell. Therefore, it may be difficult to uniformly determine information of the channel measurement signal of each cell beforehand. For example, in one system, common control signals CCH may be transmitted at the vicinity of the center of a bandwidth of the system whereas CCH may be transmitted at one end of the bandwidth of the other system.
Non-patent document 1: 3GPP TR25.913 V7.3.0(2006-03)
Non-patent document 2: 3GPP TR25.912

EP 0,881,852 discusses a low-traffic handoff method for a DCMA cellular network using different frequencies among base stations.

### DISCLOSURE OF INVENTION

According to the invention, base station and user equipment apparatuses, associated methods, and a system are defined in the independent claims, to which the reader should now refer. Specific embodiments are defined in the dependent claims.

### EFFECT OF INVENTION

With the present invention, user equipment can be easily notified which frequency is to be measured by the user equipment in preparation for frequency bandwidth handover.

### BRIEF DESCRIPTION OF DRAWINGS

Fig. 1 is a schematic diagram illustrating a mobile communication system;
Fig. 2 is a drawing illustrating system bandwidths and an example of mapping common control signals;
Fig. 3 is an explanatory diagram for explaining problems of handover between bandwidths;
Fig. 4 is a functional block diagram of user equipment according to an embodiment of the present invention;
Fig. 5 is a functional block diagram of a base station apparatus according to an embodiment of the present invention;
Fig. 6 is a flowchart (part 1) of operations according to a first embodiment of the present invention;
Fig. 7 is a flowchart (part 2) of operations according to a first embodiment of the present invention;
Fig. 8 is a flowchart of operations according to a second embodiment of the present invention;
Fig. 9 is a diagram schematically illustrating an example of mapping CCH;
Fig. 10 is a diagram schematically illustrating another example of mapping CCH; and
Fig. 11 is a flowchart of operations according to a fourth embodiment of the present invention.

### EXPLANATION OF REFERENCE NUMERALS

| | |
|---|---|
| aGW | access gateway |
| eNB | base station |
| UE | user equipment |
| 51 | outdoor reception amplifier |
| 52 | outdoor reception amplifier monitor control apparatus |
| 53 | upper layer apparatus/peripheral base station |
| 402 | management function part |
| 404 | baseband processing part |
| 406 | RF part |
| 441 | audio interface part |
| 442 | baseband and RF control part |
| 443 | L1 modem and channel codec part |
| 461 | analog front end part |
| 462 | frequency synthesizer |
| 463 | transmission part (TX) |
| 464 | power amplifying part (PA) |
| 465 | duplexer (DUP) connected to antenna |
| 466 | reception part (RX) |
| 510 | first function part |
| 520 | second function part |
| 511 | call process control function part |
| 512 | transmission path interface function part |
| 513 | baseband process function part |
| 514 | peripheral base station information storage part |
| 515, 521 | interface function part |
| 522 | wireless transmission/reception function part |
| 523 | transmission amplifier |

### BEST MODE FOR CARRYING OUT INVENTION

According to an embodiment of the present invention, when there is a handover request from user equipment UE, communication is performed between a base station of a transfer origin of the hand-over and a base station of a candidate transfer destination of the handover, and information of the channel measurement signal of the candidate transfer destination is notified to the user equipment from the transfer origin. Each candidate transfer destination wirelessly transmits a channel measurement signal according to an instruction signal from the transfer origin. By receiving the channel measurement signals, the user equipment can perform channel measurement. Therefore, even if the base station of the transfer origin does not report the information of the channel measurement signals of all candidate transfer destinations, the user equipment can simply yet appropriately be notified of information required for channel measurement of another bandwidth.

Frequency information of channel measurement signals transmitted from one or more peripheral base stations may be known or not known before receiving a request signal. In a case where it is known, it is advantageous in that frequency information does not need to be included in a response signal. In a case where it is not known, it is preferable from the aspect that appropriate frequency information can be accurately notified in an area where systems of various operators coexist.

Individual control signals may include not only frequency information of channel measurement signals but also transmission timing information.

In a case where a system has plural frequency blocks included in its bandwidth and plural resource blocks included in each frequency block, a base station apparatus thereof can allocate one or more frequency resource blocks in a frequency block assigned to the user equipment. In such a mobile communication system, it is particularly important to allow handover between bandwidths to be performed easily from the aspect of, for example, efficient use of wireless resources.

Information indicating the current cell of the user equipment can be included in the signal requesting handover. This is preferable from the aspect of promptly determining the corresponding relationship between the user equipment, the base station of the handover origin, and peripheral base stations.

Wireless resources of channel measurement signals may be searched for in at least one peripheral base station, and information indicating the wireless resource according to the search result may be included in the individual control signal. This is preferable from the aspect of increasing the chances of enabling a more suitable wireless resource to be used for channel measurement.

It may be indicated by the transmission timing information that the channel measurement signals, as a rule, are wirelessly transmitted within intermittent periods. Further, in a case where an instruction signal is transmitted, the channel measurement signals, as an exception, may be wirelessly transmitted even though not within the intermittent periods. This is preferable from the aspect of promptly completing handover.

### [Embodiment 1]

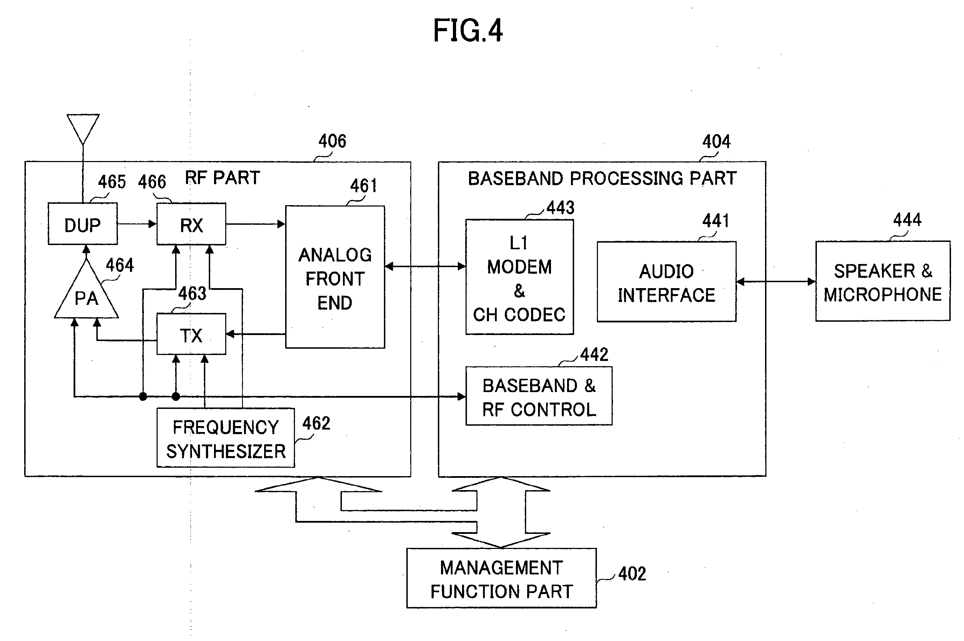

Fig. 4 is a functional block diagram illustrating user equipment (may also be referred as, for example, UE, MS, MH) according to an embodiment of the present invention. Although the user equipment illustrated in Fig. 4 is an example of a typical mobile terminal, it maybe a transportable mobile station/fixed terminal. The user equipment includes a management function part 402, a baseband processing part 404, and a RF part 406.

The baseband processing part 404 includes an audio interface part 441, a baseband & RF control part 442, and a L1 modem & channel codec part 443. The RF part 406 includes an analog front end part 461, a frequency synthesizer 462, a transmission part (TX) 463, an electric power amplifying part (PA) 464, a duplexer (DUP) 465 connected to an antenna, and a reception part (RX) 466.

The management function part 402 controls operations of the baseband processing part 404 and the RF part 406. More specifically, management of wireless channels, management of quality, management of mobility, etc., are performed. Channel measurements which lead to the below-described handover between bandwidths and generation of request signals of handover, etc., are also performed.

The audio interface part 441 of the baseband process part 404 is connected to a speaker & microphone 444 and exhibits an interface function for exchanging audio signals.

The baseband & RF control part 442 appropriately adjusts communication bandwidths.

The L1 modem & channel codec part 443 performs processes (e.g., encoding (error correction encoding, data modulation) on information to be transmitted and generates transmission symbols of baseband. The L1 modem & channel codec part 443 performs processes (e.g., Fourier transform, data de-modulation, channel decoding (error correction)) on received baseband signals and restores the transmitted information.

The analog front end part 461 of the RF part 406 performs processes such as digital to analog conversion and bandwidth control on the baseband signals to be transmitted. Further, the analog front end part 461 performs processes such as bandwidth control and analog to digital conversion on received analog signals and changes them into baseband signals.

The frequency synthesizers 462 supplies predetermined frequencies so that a transmitter is tuned to a transmission frequency and a receiver is tuned to a reception frequency.

The transmitting part (TX) 463 performs, for example, orthogonal modulation on transmission signals and frequency conversion to wireless frequency signals.

The power amplifying part (PA) 464 amplifies the power of transmission signals to an antenna transmission level.

The duplexer (DUP) 465 appropriately separates transmission signals and reception signals.

The reception part (RX) 466 performs processes such as the orthogonal demodulation of reception signals and conversion of analog signals to baseband signals.

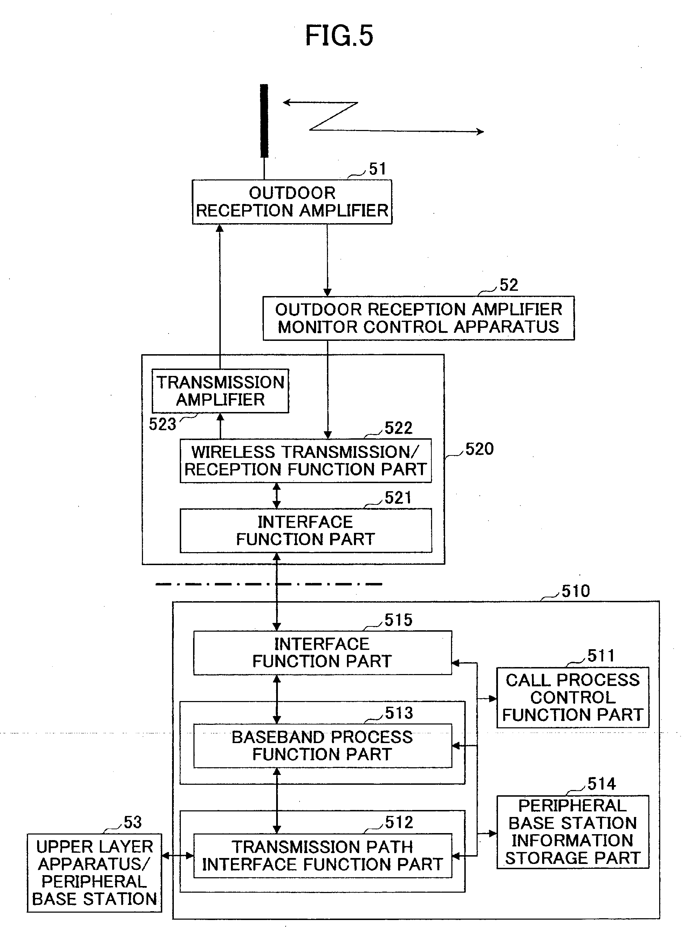

Fig. 5 is a functional block diagram illustrating a base station (may also be referred as, for example, NodeB, eNB, BS, BTS) according to an embodiment of the present invention. The base station includes a first function part 510 and a second function part 520.

The first function part 510 includes a call process control function part 511, a transmission path interface function part 512, a baseband process function part 513, a peripheral base station information storage part 514, and an interface function part 515. The second function part 520 includes an interface function part 521, a wireless transmission/reception function part 522, and a transmission amplifier 523.

The call process control function part 511 performs control of call processes. More specifically, management of wireless channels, management of physical lines, management of quality control, etc., are performed. Scheduling for planning the allocation of wireless resources in the uplinks and downlinks is also performed here.

The transmission path interface function part 512 is connected to an upper layer apparatus or other base stations 53 by cable (it may be optical or electrical) and exhibits an interface function between, for example, the upper layer apparatus 53 and the base station.

The baseband process function part 513 performs processes such as channel encoding (error correction encoding) of a wireless transmission signal, data modulation, and inverse Fourier transform. The baseband process function part 513 performs processes such as channel decoding (error correction) of a wireless reception signal and data demodulation.

The peripheral base station information storage part 514 stores a corresponding relationship between the apparatus itself and peripheral base stations. The peripheral base station information storage part may store information of the channel measurement signals currently used in the peripheral base stations (e.g., frequency, transmission timing) according to necessity.

The interface function part 515 exhibits an interface function between the first function part 510 and the second function part 520. The interface function part 515 is advantageous particularly when the first function part and the second function part are significantly separated in terms of location.

The same as the interface function part 515 of the first function part 510, the interface function part 521 of the second function part 520 exhibits an interface function between the first and second function parts.

The wireless transmission/reception function part 522 performs processes such as digital to analog conversion of transmission signals of base band, and orthogonal modulation. The wireless transmission/reception function part 522 processes such as synchronous detection, orthogonal demodulation, and analog to digital conversion.

The transmission amplifier 523 amplifies the power of transmission signals to an antenna transmission level.

The outdoor reception amplifier 51 consists of low noise amplifiers.

The outdoor reception amplifier monitor control apparatus 52 monitors signals received through the outdoor reception amplifiers.

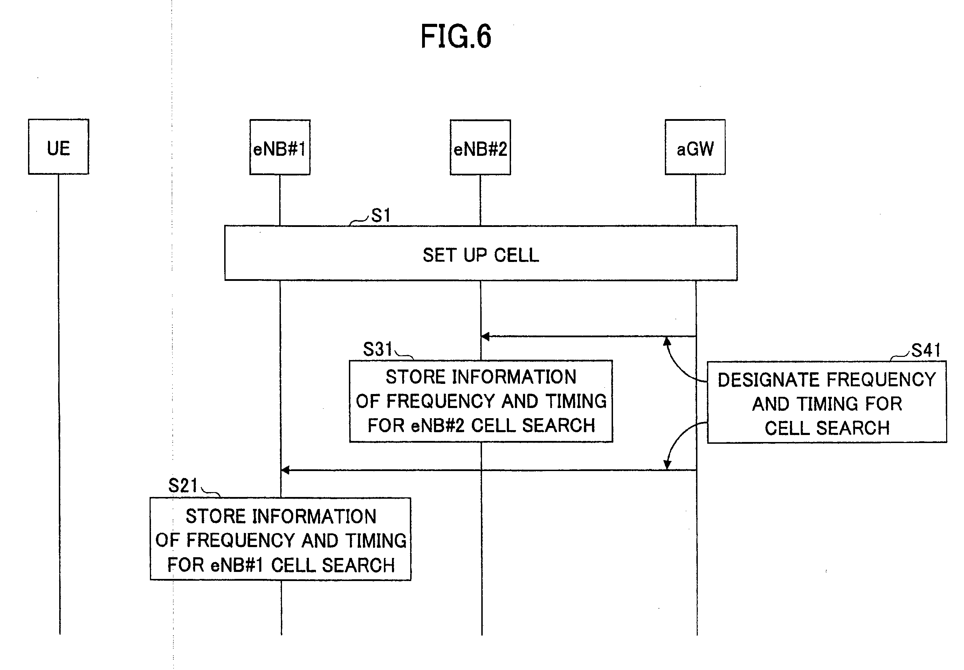

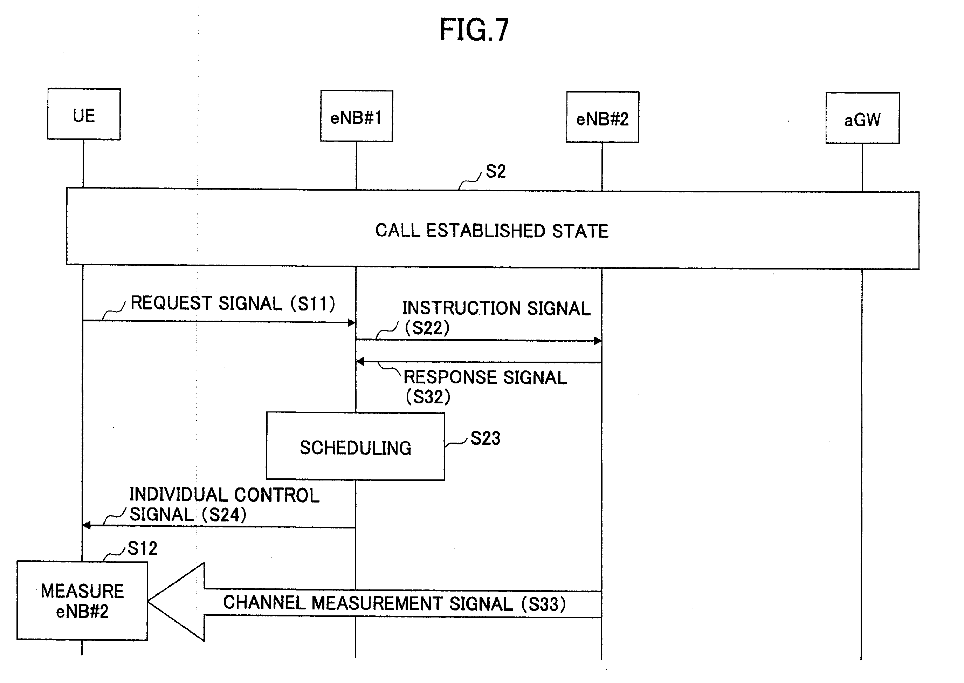

Figs. 6 and 7 show flowcharts (part 1 and 2) of exemplary operations according to the first embodiment of the present invention. Generally, single digit step numbers represent procedures which are relatively unimportant for the present invention. The step numbers in the tens represent procedures performed by or procedures instructed by the user equipment. The step numbers in the twenties represent procedures performed by or procedures instructed by a handover origin base station eNB#1. The step numbers in their thirties represent procedures performed by or procedures instructed by a handover destination base station eNB#2. The step numbers in their forties represent procedures performed by or procedures instructed by an access gateway aGW.

In step S1 of Fig. 6, a cell setup procedure is executed, and setting of various parameters is performed so that base stations eNB#1, eNB#2 subordinate to a certain access Gateway aGW are appropriately connected. Although the example in the drawing illustrates two base stations for the sake of simplifying explanation, more than two base stations may participate. The cell setup procedure may be executed in a case where a base station is newly established or re-established, a case where a base station is reset, or a case where a used bandwidth is changed (e.g., change from 20 MHz to 10 MHz).

In step S41, the information of the channel measurement signal (frequency and timing for a cell search) is notified to each base station eNB#1 and eNB#2 from the access gateway aGW. In this embodiment, unlike the below-described second embodiment, the information of the channel measurement signals is managed in a unified manner by the access gateway aGW and is determined at the time of the cell setup.

In step S21, information (frequency and timing for a cell search) indicating how to transmit channel measurement signals is notified to the base station eNB#1, and the information is stored by the base station eNB#1.

In step S31, information (frequency and timing for a cell search) indicating how to transmit channel measurement signals is notified to the base stations eNB#2, and the information is stored by the base station eNB#2.

In step S2 of Fig. 7 illustrates a call established state where a call of a certain user equipment UE is started. Thereby, the user equipment UE can perform wireless communications by receiving allocation of wireless resources from a base station eNB#1. Although the base station eNB#2 in the periphery of the base station eNB#1 does not participate in the communication with the user equipment UE at this time, confirmation is made that they are both peripheral base stations.

The user equipment UE measures reception signal quality while performing communication in the cell of the base station eNB#1. In a case where an event such as degrading of quality occurs, a handover request signal (specifically, a measurement report message) indicating the event is generated.

In step S11, the user equipment UE transmits the handover request signal to a currently connected base station eNB#1.

In step S22, the base station eNB#1 of the handover origin transmits an instruction signal to the peripheral base station eNB#2 according to the handover request signal. The instruction signal is a signal to peripheral base stations which instructs starting of wireless communication of the channel measurement signals. The instruction signal may be transmitted to all peripheral base stations, or may be transmitted only to a limited portion of peripheral base stations in view of, for example, the location of the user equipment. It is preferable for the handover request signal to include identification information UEID which identifies the user equipment, information indicating that handover is necessary, and information indicating in what cell the user equipment currently exists (information indicating that the connected base station is eNB#1). This is because the relationship between the user equipment UE desiring handover, the handover origin base station eNB#1, and the handover destination base station eNB#2 can be promptly identified. By using this corresponding relationship, information of the channel measurement signals of each peripheral base station can be included in the below-described individual control signals. This is because, when the information indicating the eNB#1 is not included in the handover request, it becomes necessary to confirm whether the user equipment exists in its cell after the handover request signal is received, which becomes troublesome.

In step S32, a response signal responsive to the instruction signal is transmitted from the peripheral base station eNB#2 to the handover origin base station eNB#1.

In step S23, scheduling of wireless resources is performed. Generally, individual control signals are also used for notifying scheduling information indicating how to allocate wireless resources of uplinks and downlinks for transmitting user data signals. The base station eNB#1 of the transfer origin performs the scheduling of wireless resources for the user equipment by avoiding interference with the frequency and timing of the channel measurement signals of the peripheral base station eNB#2 so that the user equipment can shift to a frequency of another bandwidth and perform channel measurement. The individual control signal is generated including the scheduling information according to necessity and including information (e.g., frequency information and transmission timing information) of the channel measurement signals currently used in the cell (peripheral base station eNB#2) of the handover destination.

In step S24, the individual control signal created in such manner is wirelessly transmitted from the handover origin base station eNB#1 to the user equipment UE. The individual control signal may be referred to as measurement control. It is to be noted that the information of the channel measurement signals used by the cell (peripheral base station eNB#2) of the handover destination may or may not be included in the response signal of step S32. In the latter case where the information is not included in the response signal, the base station eNB#1 is not only required to store the information of the channel measurement signals of own station but also the information of the channel measurement signals of the peripheral base station eNB#2.

In step S12, according to the information notified by the individual control signal, the user equipment UE matches reception frequency with the channel measurement signal of the transfer destination cell and performs channel measurement. If the timing for transmission is also designated, control is performed so that the channel measurement signals are received according to the timing. Although a pilot signal may be used as a signal for channel measurement, other signals may also be used.

As illustrated in step S33, the channel measurement signal is wirelessly transmitted from the transfer destination base station eNB#2 according to a predetermined frequency and timing. As described above, the predetermined frequency and timing are decided at the time of step S41. In this case, the channel measurement signal may actually be wirelessly transmitted from the transfer destination base station eNB#2 according to the predetermined frequency and timing rather than an instruction signal from the transfer origin base station. Alternatively, even where the frequency and timing of the channel measurement signal are predetermined, the channel measurement signal may not be a wireless transmission unless there is an instruction signal from the transfer origin base station and wirelessly transmitted from the transfer destination base station eNB#2 is made according to the predetermined frequency and timing only when the transfer destination base station receives an instruction signal.

### [Embodiment 2]

In the first embodiment, the information of the channel measurement signals of the peripheral base station may be known beforehand in the handover origin base station eNB#1 before receiving a handover request signal. However, in a circumstance where various kinds of systems, operators, vendors, etc. exist, it is not easy to prepare all of information in advance. The second embodiment of the present invention is for resolving such problems.

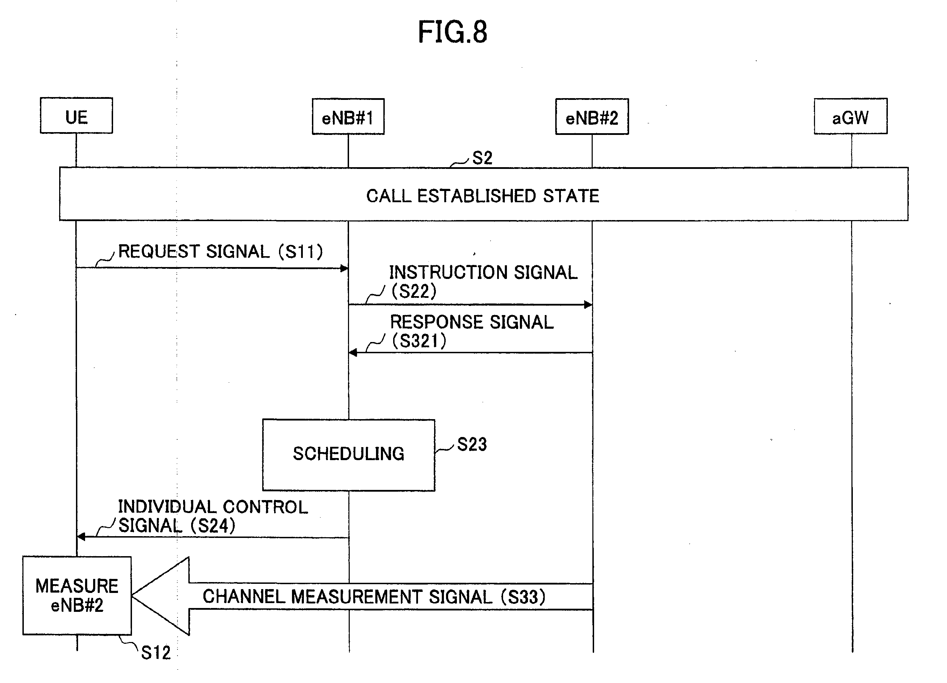

Fig. 8 illustrates a flowchart of operations according to the second embodiment of the present invention. This flowchart is basically the same as that of the flowchart illustrated in Fig. 7. In this embodiment, information of channel measurement signals is not managed in a unified manner by an upper layer apparatus of the base station (access gateway aGW) as in step S41 of Fig. 6. Therefore, the base station eNB#1 of the handover origin does not know the information of the channel measurement signal of the peripheral base station before receiving a handover request signal. This information needs to be included in the response signal responsive to the instruction signal from the transfer origin base station eNB#1 (step S321). This is different from the first embodiment where such information is not required to be included in the response signal. The transfer origin base station eNB#1 can collect the information of the channel measurement signal of peripheral base stations by receiving response signals from one or more of the peripheral base stations. Below, in the same manner as the procedures described above with Fig. 7, an individual control signal including the information is generated and scheduled (step S23) and transmitted (step S24).

### [Embodiment 3]

The information of the channel measurement signal included in the common control signal CCH may be identified by either one of or both of the frequency information and the transmission timing information.

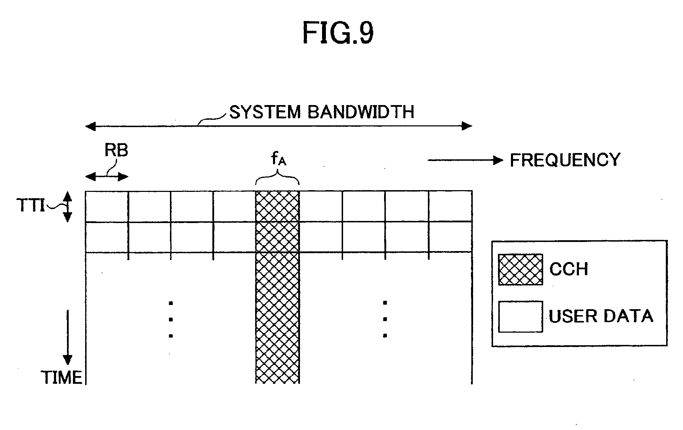

Fig. 9 schematically illustrates mapping of the common control signal CCH from a viewpoint of both time and frequency. There is illustrated an example where common control signals CCH are consecutively transmitted at a frequency f_{A} in a cell A. The system bandwidth is a bandwidth currently supported in a cell such as 20 MHz or 10 MHz. As described above, the user equipment UE performs communications using one or more resource blocks (RB) in all or a part of the frequency bands of the system bandwidth. The planning of allocating the resource blocks is performed by scheduling of the base stations. The unit of the wireless resource to be allocated with respect to the direction of the frequency axis is a single resource block (RB) and the unit of the wireless resource to be allocated with respect to the direction of the time axis is a single transmission time interval (TTI). In a case where the common control signal CCH is transmitted in a manner illustrated in Fig. 9, the information of the channel measurement signal notified to the user equipment may simply be only the frequency information (information indicating that the frequency is f_{A}).

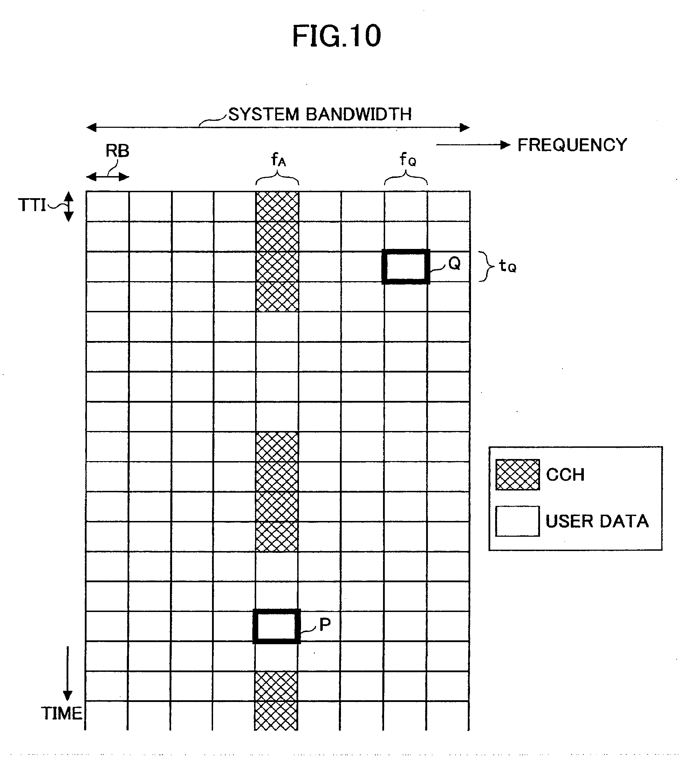

Fig. 10 illustrates another example of mapping the common control signal CCH. Although the common control signal CCH is transmitted with the same frequency f_{A} as illustrated in Fig. 9, it is different in that the common control signal CCH is not always sent consecutively and transmitted intermittently every 4 TTIs. In this case, the information of the channel measurement signal notified to the user equipment may include timing information (information indicating that transmission timing is intermittent every 4 TTIs) in addition to frequency information (information indicating that the frequency is f_{A}). However, in a case where insignificant channel measurement is allowed to be performed over the period of a maximum of 4 TTI, only frequency information may be notified to the user equipment.

In the example illustrated in Fig. 10, the timing for performing significant channel measurement is made to wait for a maximum of 4 TTIs because the common control signal CCH is transmitted intermittently every 4 TTIs. Since this delay causes delay of handover, this delay is not desirable from an aspect of promptly performing handover. From the aspect of promptly performing handover, it is advantageous to, for example, transmit channel measurement signals with the frequency f_{A} as an exception when receiving an instruction signal from the handover transfer origin base station in a case where the common control signal CCH is, as a rule, transmitted within the period of 4 TTIs. In Fig. 10, the wireless resource indicated as "P" is used for transmission of the common control signal CCH as an exception. Thus, by conducting scheduling of the allocation of the wireless resources, the problem regarding the delay of handover can be resolved.

### [Embodiment 4]

In the above-described embodiments, since there is a premise that the channel measurement signal is included in the common control signal CCH, it is assumed that the frequency and/or transmission timing of the channel measurement signal is fixed. However, in terms of at least the channel measurement signal, it does not need to be fixed inside a cell. In other words, the signals used for channel measurement may use any of the resources available. The fourth embodiment of the present invention describes an example where wireless resources used for channel measurement signals are not determined by transmission of response signals.

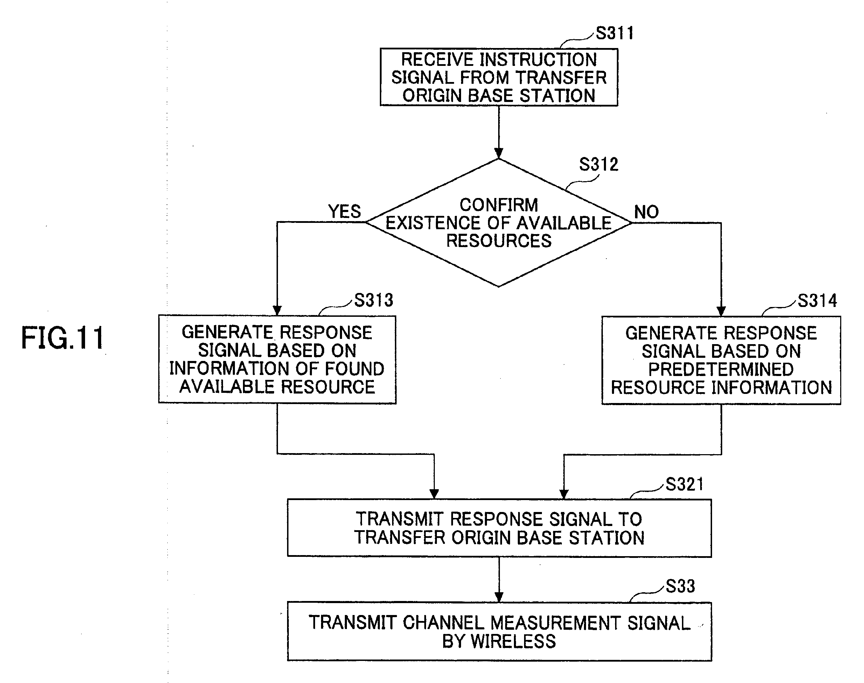

Fig. 11 illustrates a flowchart of operations according to the fourth embodiment. Step S311 of the drawing corresponds to step S22 of Fig. 8, and steps S321 and S33 are the same as those of Fig. 8. Therefore, step S312, S313, and S314 are performed between steps S22 and S321 of Fig. 8 and performed in the candidate transfer destination base station eNB#2.

In step S311, an instruction signal is received from the transfer origin base station eNB#1 upon its receiving a handover request from the user equipment.

In step S312, the existence of available resources is confirmed. For example, as illustrated in Fig. 10, when a common control signal (including channel measurement signal) is mapped, available resources (indicated as "Q") are searched for. If an available resource is found, the flow proceeds to step S313.

In step S313, the frequency information and the transmission timing information (in the illustrated example, information where frequency is indicated as "f _{Q}" and transmission timing is indicated as "t_{Q}") for identifying the available resource are included in the response signal of the base stations eNB#1.

On the other hand, if no available resource is found in step S312, the flow proceeds to step S314.

In step S314, the information indicating the fixed resource ensured in the channel measurement signal of the base station eNB#2 (in the illustrated example, information where frequency is indicated as "f_{A}" and information indicating that intermittent transmission of every 4 TTIs) is included in the response signal of the base station eNB#1.

In step S321, the response signal which designates an available resource or a predetermined resource is transmitted to the base station eNB#1.

In step S33, the channel measurement signal is wirelessly transmitted according to the content designated in the response signal.

The target of the search for available resources may be all of the wireless resources to be allocated or a portion thereof. In the example illustrated in Fig. 10, the search for available resources may be limited to the period 4 TTIs where no CCH is transmitted and the channel measurement signals of CCH may be used in a case of transmitting CCH. Furthermore, from an aspect of promptly completing handover, a given wireless resource may be scheduled with priority without depending on the existence of available resources.

As mentioned above, although preferred embodiments of the present invention has been described, the present invention is not necessarily limited to these and various changes are possible within the scope of the present invention. Particularly, the numerical examples are described by way of example unless otherwise noted, and any other suitable numeric example may be used. For the sake of convenience, although the present invention is described by being divided into some embodiments, the dividing into embodiments is not essential to the present invention, and two or more embodiment may be combined together if needed.

## Claims

1. A base station apparatus (eNB#1) used in a mobile communication system performing communications using all or a part of a system bandwidth, the base station apparatus comprising:
a part (510, 512) for receiving a request signal requesting handover between bandwidths from a user equipment (UE);
a part (510) for transmitting an instruction signal to one or more peripheral base stations which are handover transfer destination candidates (eNB#2) according to the request signal; and
a part (510) for receiving a response signal responsive to the instruction signal from one or more peripheral base stations (eNB#2); **characterized by** further comprising:
a part (510) for transmitting an individual control signal to the user equipment according to the response signal, the individual control signal including at least frequency information of a channel measurement signal of the handover transfer destination candidate (eNB#2);
wherein the frequency information indicates a frequency to be used for a channel measurement to be performed by the user equipment (UE) with respect to the one or more peripheral base stations (eNB#2); and
wherein the instruction signal transmitted by the base station apparatus (eNB#1) to the one or more peripheral base stations (eNB#2) is a signal for causing the one or more peripheral base stations (eNB#2) to transmit the channel measurement signal to the user equipment (UE) in the frequency indicated in the frequency information.

2. The base station apparatus (eNB#1) as claimed in claim 1, **characterized in that** the frequency information of the channel measurement signal transmitted from each of the one or more peripheral base stations (eNB#2) is known before receiving the request signal.

3. The base station apparatus (eNB#1) as claimed in claim 1, **characterized in that** the frequency information of the channel measurement signal transmitted from each of the one or more peripheral base stations (eNB#2) is not known before receiving the request signal.

4. The base station apparatus (eNB#1) as claimed in claim 1, **characterized in that** the individual control signal includes the frequency information and transmission timing information of the channel measurement signal.

5. The base station apparatus (eNB#1) as claimed in claim 1, **characterized in that** a plurality of frequency blocks are included in the system bandwidth, wherein each of the frequency blocks includes a plurality of frequency resource blocks, wherein the base station apparatus is configured to allocate one or more of the frequency resource blocks in the frequency block assigned to the user equipment (UE).

6. The base station apparatus (eNB#1) as claimed in claim 1, **characterized in that** information indicating a current cell of the user equipment (UE) is included in the request signal.

7. The base station apparatus (eNB#1) as claimed in claim 4, **characterized in that** the transmission timing information indicates that the channel measurement signal is wirelessly transmitted during an intermittent predetermined period.

8. A method used by a base station apparatus (eNB#1) of a mobile communication system performing communications using all or a part of a system bandwidth, the method comprising:
a step of receiving a request signal (S11) requesting handover between bandwidths from a user equipment;
a step of transmitting an instruction signal (S22) to one or more peripheral base stations which are handover transfer destination candidates according to the request signal; and
a step of receiving a response signal (S321) responsive to the instruction signal from the one or more peripheral base stations;
**characterized by** further comprising:
a step of transmitting an individual control signal (S24) to the user equipment according to the response signal, the individual control signal including at least frequency information of a channel measurement signal of the handover transfer destination candidate;
wherein the frequency information indicates a frequency to be used for a channel measurement to be performed by the user equipment (UE) with respect to the one or more peripheral base stations (eNB#2); and
wherein the instruction signal transmitted by the base station apparatus (eNB#1) to the one or more peripheral base stations (eNB#2) is a signal for causing the one or more peripheral base stations (eNB#2) to transmit the channel measurement signal to the user equipment (UE) in the frequency indicated in the frequency information.

9. A base station apparatus (eNB#2) used in a mobile communication system performing , communications using all or a part of a system bandwidth, the base station apparatus comprising:
a part (510) for receiving an instruction signal (S22) from a transfer origin base station (eNB#1) of a handover caused by a request for handover between bandwidths from a user equipment (UE); and
a part (510) for transmitting a response signal according to the instruction signal so that at least frequency information of a channel measurement signal (S33) is notified to the user equipment in an individual control signal (S24) transmitted from the transfer origin base station (eNB#1) ;
**characterized by** further comprising:
a part (510) for transmitting the channel measurement signal to the user equipment (UE) in a frequency of the frequency information in response to the instruction signal received from the transfer origin base station (eNB#1).

10. The base station apparatus (eNB#2) as claimed in claim 9, **characterized in that** the base station apparatus (eNB#2) is further configured to search for a wireless resource of the channel measurement signal, wherein information indicating the wireless resource determined according to a result of the search is included in the response signal.

11. The base station apparatus (eNB#2) as claimed in claim 9, **characterized in that** the response signal includes the frequency information and transmission timing information of the channel measurement signal.

12. The base station apparatus (eNB#2) as claimed in claim 11, **characterized in that** the transmission timing information indicates that the channel measurement signal is wirelessly transmitted during an intermittent predetermined period.

13. A method used by a base station apparatus (eNB#2) of a mobile communication system performing communications using all or a part of a system bandwidth, the method comprising:
a step of receiving an instruction signal (S22) from a transfer origin base station (eNB#1) of a handover caused by a request for handover between bandwidths from a user equipment (UE); and
**characterized by** further comprising:
a step of transmitting a response signal (S321) according to the instruction signal so that at least frequency information of a channel measurement signal is notified to the user equipment (UE) in an individual control signal (S24) transmitted from the transfer origin base station (eNB#1); and
a step of transmitting the channel measurement signal (S33) to the user equipment (UE) in a frequency of the frequency information in response to the instruction signal.

14. A user equipment (UE) used in a mobile communication system performing communications using all or a part of a system bandwidth, the user equipment comprising:
a part (406) for transmitting a request signal requesting handover between bandwidths to a transfer origin base station of the handover;
**characterized by** further comprising:
a part (406) for receiving an individual control signal (S24), including at least frequency information of a channel measurement signal (S33) of one or more peripheral base stations which are handover transfer destination candidates, from the transfer origin base station (eNB#1); and
a part for receiving the channel measurement signal in a frequency of the frequency information from one or more peripheral base stations (eNB#2) which are handover transfer destination candidates;
wherein the frequency information indicates a frequency to be used for a channel measurement to be performed by the user equipment (UE) with respect to the one or more peripheral base stations (eNB#2); and
wherein the user equipment is operable to perform the channel measurement using the channel measurement signal (S33) transmitted from the one or more peripheral base stations (eNB#2) in the frequency indicated in the frequency information in the individual control signal received by the user equipment (UE) from the transfer origin base station (eNB#1).

15. The user equipment (UE) as claimed in claim 14, **characterized in that** the individual control signal includes the frequency information and transmission timing information of the channel measurement signal.

16. The user equipment (UE) as claimed in claim 14, **characterized in that** information indicating a current cell of the user equipment is included in the request signal.

17. The user equipment (UE) as claimed in claim 15, **characterized in that** the transmission timing information indicates that the channel measurement signal is wirelessly transmitted during an intermittent predetermined period.

18. A method used by a user equipment (UE) of a mobile communication system performing communications using all or a part of a system bandwidth, the method comprising:
a step of transmitting a request signal (S11) requesting handover between bandwidths to a transfer origin base station (eNB#1) of the handover;
a step of receiving an individual control signal (S24), including at least frequency information of a channel measurement signal (S33) of one or more peripheral base stations which are handover transfer destination candidates, from the transfer origin base station (eNB#1); and
**characterized by**:
a step of receiving the channel measurement signal in a frequency of the frequency information from one or more peripheral base stations (eNB#2) which are handover transfer destination candidates;
wherein the frequency information indicates a frequency to be used for a channel measurement to be performed by the user equipment (UE) with respect to the one or more peripheral base stations (eNB#2); and
wherein the channel measurement is performed in the user equipment (UE) using the channel measurement signal (S33) transmitted from the one or more peripheral base stations (eNB#2) in the frequency indicated in the frequency information in the individual control signal received by the user equipment (UE) from the transfer origin base station (eNB#1).

19. A mobile communication system comprising:
a user equipment (UE) as claimed in any of claims 14 to 17;
a first base station (eNB#1) as claimed in any of claims 1 to 7; and
a second base station (eNB#2) as claimed in any of claims 9 to 12.

## Patentansprüche

1. Eine Basisstation-Vorrichtung (eNB#1), verwendet in einem mobilen Kommunikationssystem, welches Kommunikation unter Verwendung der gesamten oder eines Teils einer Systembandbreite ausführt, wobei die Basisstation-Vorrichtung umfasst:
einen Teil (510, 512) zum Empfangen eines eine Übergabe zwischen Bandbreiten anforderndes Anfragesignals von einem Benutzerendgerät (UE);
einen Teil (510) zum Übermitteln eines Anweisungssignals zu einem oder mehreren peripheren Basisstationen, welche entsprechend dem Anfragesignal Übergabetransferdestinations-Kandidaten (eNB#2) sind; und
einen Teil (510) zum Empfangen eines Antwortsignals als Antwort auf das Anweisungssignal von einem oder mehreren der peripheren Basisstationen (eNB#2);
**gekennzeichnet durch** weiterhin umfassend:
einen Teil (510) zum Übermitteln eines individuellen Steuersignals an das Benutzerendgerät entsprechend dem Antwortsignal, wobei das individuelle Steuersignal zumindest eine Frequenzinformation eines Kanalmessungs-Signals des Übergabetransferdestinations-Kandidaten (eNB#2) umfasst;
wobei die Frequenzinformation eine für eine **durch** das Benutzerendgerät (UE) auszuführende Kanalmessung zu verwendende Frequenz angibt, mit Bezug zu einem oder mehreren der peripheren Basisstationen (eNB#2); und wobei das **durch** die Basisstation-Vorrichtung (eNB#1) zu einer oder mehreren der peripheren Basisstationen (eNB#2) übermittelte Anweisungssignal ein Signal ist zum Bewirken, dass die eine oder mehreren peripheren Basisstationen (eNB#2) das Kanalmessungs-Signal an das Benutzerendgerät (UE) mit der in der Frequenzinformation angegebenen Frequenz übermitteln.

2. Die Basisstation-Vorrichtung (eNB#1) wie in Anspruch 1 beansprucht, **dadurch gekennzeichnet, dass** die Frequenzinformation des von einem jeden der einen oder mehreren peripheren Basisstationen (eNB#2) übermittelten Kanalmessungs-Signals vor dem Empfangen des Anfragesignals bekannt ist.

3. Die Basisstation-Vorrichtung (eNB#1) wie in Anspruch 1 beansprucht, **dadurch gekennzeichnet, dass** die Frequenzinformation des von einem jeden der einen oder mehreren peripheren Basisstationen (eNB#2) übermittelten Kanalmessungs-Signals nicht vor dem empfangen des Anfragesignals bekannt ist.

4. Die Basisstation-Vorrichtung (eNB#1) wie in Anspruch 1 beansprucht, **dadurch gekennzeichnet, dass** das individuelle Steuersignal die Frequenzinformation und eine Übermittlungszeitablauf-Information des Kanalmessungs-Signals umfasst.

5. Die Basisstation-Vorrichtung (eNB#1) wie in Anspruch 1 beansprucht, **dadurch gekennzeichnet, dass** eine Vielzahl von Frequenzblöcken in der Systembandbreite enthalten sind, wobei jeder der Frequenzblöcke eine Vielzahl von Frequenzressourcenblöcken enthält, wobei die Basisstation-Vorrichtung konfiguriert ist zum Zuweisen von einem oder mehreren der Frequenzressourcenblöcken in dem dem Benutzerendgerät (UE) zugeordneten Frequenzblock.

6. Die Basisstation-Vorrichtung (eNB#1) wie in Anspruch 1 beansprucht, **dadurch gekennzeichnet, dass** eine aktuelle Zelle des Benutzerendgeräts (UE) anzeigende Information in dem Anfragesignal enthalten ist.

7. Die Basisstation-Vorrichtung (eNB#1) wie in Anspruch 4 beansprucht, **dadurch gekennzeichnet, dass** die Übermittlungszeitablauf-Information anzeigt, dass das Kanalmessungs-Signal während einer periodischen vorbestimmten Zeitperiode drahtlos übermittelt wird.

8. Ein Verfahren verwendet von einer Basisstation-Vorrichtung (eNB#1) eines mobilen Kommunikationssystem, welches eine Kommunikation unter Verwendung der gesamten oder eines Teils einer Systembandbreite ausführt, wobei das Verfahren umfasst:
einen Schritt zum Empfangen eines eine Übergabe zwischen Bandbreiten anforderndes Anfragesignals (S11) von einem Benutzerendgerät;
einen Schritt zum Übermitteln eines Anweisungssignals (S22) zu einem oder mehreren peripheren Basisstationen, welche entsprechend dem Anfragesignal Übergabetransferdestinations-Kandidaten sind; und
einen Schritt zum Empfangen eines Antwortsignals (S321) als Antwort auf das Anweisungssignal von einem oder mehreren der peripheren Basisstationen;
**gekennzeichnet durch** weiterhin umfassend:
einen Schritt zum Übermitteln eines individuellen Steuersignals (S24) an das Benutzerendgerät entsprechend dem Antwortsignal, wobei das individuelle Steuersignal zumindest eine Frequenzinformation eines Kanalmessungs-Signals des Übergabetransferdestinations-Kandidaten umfasst;
wobei die Frequenzinformation eine für eine **durch** das Benutzerendgerät (UE) auszuführende Kanalmessung zu verwendende Frequenz angibt, mit Bezug zu einem oder mehreren der peripheren Basisstationen (eNB#2); und
wobei das **durch** die Basisstation-Vorrichtung (eNB#1) zu einem oder mehreren der peripheren Basisstationen (eNB#2) übermittelte Anweisungssignal ein Signal ist zum Bewirken, dass die eine oder mehreren peripheren Basisstationen (eNB#2) das Kanalmessungs-Signal an das Benutzerendgerät (UE) mit der in der Frequenzinformation angegebenen Frequenz übermittelt.

9. Eine Basisstation-Vorrichtung (eNB#2) verwendet in einem mobilen Kommunikationssystem, welches eine Kommunikation unter Verwendung der gesamten oder eines Teils einer Systembandbreite ausführt, wobei die Basisstation-Vorrichtung umfasst:
einen Teil (510) zum Empfangen von einem Anweisungssignal (S22) von einer Übermittlungsursprungs-Basisstation (eNB#1) einer Übergabe, welche durch eine Anfrage für eine Übergabe zwischen Bandbreiten von einem Benutzerendgerät (UE) bewilligt wurde; und
einen Teil (510) zum Übermitteln eines Antwortsignals entsprechend dem Anweisungssignal, so dass zumindest eine Frequenzinformation eines Kanalmessungs-Signals (S33) dem Benutzerendgerät in einem von der Übermittlungsursprungs-Basisstation (eNB#1) übermittelten individuellen Steuersignal (S24) gemeldet wird;
**gekennzeichnet durch** weiterhin umfassend:
einen Teil (510) zum Übermitteln des Kanalmessungs-Signals an das Benutzerendgerät (UE) auf einer Frequenz der Frequenzinformation als Antwort auf das von der Übermittlungsursprungs-Basisstation (eNB#1) erhaltenen Anweisungssignal.

10. Die Basisstation-Vorrichtung (eNB#2) wie in Anspruch 9 beansprucht, **dadurch gekennzeichnet, dass** die Basisstation-Vorrichtung (eNB#2) weiterhin konfiguriert ist zum Suchen nach einer drahtlosen Ressource des Kanalmessungs-Signals, wobei eine die entsprechend dem Ergebnis der Suche bestimmte drahtlose Ressource anzeigende Information in dem Antwortsignal enthalten ist.

11. Die Basisstation-Vorrichtung (eNB#2) wie in Anspruch 9 beansprucht, **dadurch gekennzeichnet, dass** das Antwortsignal die Frequenzinformation und eine Übermittlungszeitablauf-Information des Kanalmessungs-Signals umfasst.

12. Die Basisstation-Vorrichtung (eNB#2) wie in Anspruch 11 beansprucht, **dadurch gekennzeichnet, dass** die Übermittlungszeitablauf-Information anzeigt, dass das Kanalmessungs-Signal während einer periodischen vorbestimmten Zeitperiode drahtlos übermittelt wird.

13. Ein Verfahren verwendet von einer Basisstation-Vorrichtung (eNB#2) eines mobilen Kommunikationssystems, welches Kommunikation unter Verwendung der gesamten oder eines Teils einer Systembandbreite ausführt, wobei das Verfahren umfasst:
einen Schritt zum Empfangen eines Anweisungssignals (S22) Übermittlungsursprungs-Basisstation (eNB#1) einer Übergabe, welche durch eine Anfrage für eine Übergabe zwischen Bandbreiten von einem Benutzerendgerät (UE) bewilligt wurde; und
**gekennzeichnet durch** weiterhin umfassend:
einen Schritt zum Übermitteln eines Antwortsignals (S321) entsprechend dem Anweisungssignal, so dass zumindest eine Frequenzinformation eines Kanalmessungs-Signals dem Benutzerendgerät (UE) in einem von der Übermittlungsursprungs-Basisstation (eNB#1) übermittelten individuellen Steuersignal (S24) gemeldet wird;
einen Schritt zum Übermitteln des Kanalmessungs-Signals (S33) an das Benutzerendgerät (UE) auf einer Frequenz der Frequenzinformation als Antwort auf das Anweisungssignal.

14. Ein Benutzerendgerät (UE) verwendet in einem mobilen Kommunikationssystem, welches Kommunikation unter Verwendung der gesamten oder eines Teils einer Systembandbreite ausführt, wobei das Benutzerendgerät umfasst:
einen Teil (406) zum Übermitteln eines eine Übergabe zwischen Bandbreiten anforderndes Anfragesignals an eine Übermittlungsursprungs-Basisstation der Übergabe;
**gekennzeichnet durch** weiterhin umfassend:
einen Teil (406) zum Übermitteln eines individuellen Steuersignals (S24), welches zumindest eine Frequenzinformation eines Kanalmessungs-Signals (S33) von einem oder mehreren der peripheren Basisstationen umfasst, welche Übergabetransferdestinations-Kandidaten von der Übermittlungsursprungs-Basisstation (eNB#1) sind; und
einen Teil zum Empfangen des Kanalmessungs-Signals auf einer Frequenz der Frequenzinformation von einem oder mehreren peripheren Basisstationen (eNB#2), welche Übergabetransferdestinations-Kandidaten sind;
wobei die Frequenzinformation eine für eine **durch** das Benutzerendgerät (UE) auszuführende Kanalmessung zu verwendende Frequenz angibt mit Bezug zu einem oder mehreren der peripheren Basisstationen (eNB#2); und
wobei das Benutzerendgerät (UE) betreibbar ist zum Ausführen der Kanalmessung unter Verwendung des Kanalmessungs-Signals (S33), welches von dem einem oder mehreren der peripheren Basisstationen (eNB#2) auf der in der Frequenzinformation angezeigten Frequenz auf dem von dem Benutzerendgerät (UE) erhaltenen individuellen Steuersignal von der Übermittlungsursprungs-Basisstation (eNB#1) übermittelt wird.

15. Das Benutzerendgerät (UE) wie in Anspruch 14 beansprucht, **dadurch gekennzeichnet, dass** das individuelle Steuersignal die Frequenzinformation und Übermittlungszeitablauf-Information des Kanalmessungs-Signals umfasst.

16. Das Benutzerendgerät (UE) wie ein Anspruch 14 beansprucht, **dadurch gekennzeichnet, dass** eine aktuelle Zelle des Benutzerendgeräts (UE) anzeigende Information in dem Anfragesignal enthalten ist.

17. Das Benutzerendgerät (UE) wie in Anspruch 15 beansprucht, **dadurch gekennzeichnet, dass** die Übermittlungszeitablauf-Information anzeigt, dass das Kanalmessungs-Signal während einer periodischen vorbestimmten Zeitperiode drahtlos übermittelt wird.

18. Ein Verfahren verwendet von einem Benutzerendgerät (UE) eines mobilen Kommunikationssystems, welches eine Kommunikation unter Verwendung der gesamten oder eines Teils einer Systembandbreite ausführt, wobei das Verfahren umfasst:
einen Schritt zum Übermitteln eines eine Übergabe zwischen Bandbreiten anforderndes Anfragesignals (S11) an eine Übermittlungsursprungs-Basisstation (eNB#1) der Übergabe;
einen Schritt zum Empfangen eines individuellen Steuersignals (S24), welches zumindest eine Frequenzinformation eines Kanalmessungs-Signals (S33) von einem oder mehreren peripheren Basisstationen umfasst, welche Übergabetransferdestinations-Kandidaten sind, von der Übermittlungsursprungs-Basisstation (eNB#1); und
**gekennzeichnet durch**:
einen Schritt zum Empfangen des Kanalmessungs-Signals auf einer Frequenz der Frequenzinformation von einem oder mehreren peripheren Basisstationen (eNB#2), welche Übergabetransferdestinations-Kandidaten sind;
wobei die Frequenzinformation eine für eine **durch** das Benutzerendgerät (UE) auszuführende Kanalmessung zu verwendende Frequenz angibt mit Bezug zu einem oder mehreren der peripheren Basisstationen (eNB#2); und
wobei die Kanalmessung in dem Benutzerendgerät (UE) ausgeführt wird unter Verwendung des Kanalmessungs-Signals (S33), welches von dem einem oder mehreren der peripheren Basisstationen (eNB#2) auf der in der Frequenzinformation angezeigten Frequenz auf dem von dem Benutzerendgerät (UE) erhaltenen individuellen Steuersignal von der Übermittlungsursprungs-Basisstation (eNB#1) übermittelt wird.

19. Ein mobiles Kommunikationssystem umfassend:
ein Benutzerendgerät (UE) wie in einem der Ansprüche 14 bis 17 beansprucht;
eine erste Basisstation (eNB#1) wie in einem der Ansprüche 1 bis 7 beansprucht; und
eine zweite Basisstation (eNB#2) wie in einem der Ansprüche 9 bis 12 beansprucht.

## Revendications

1. Appareil de station de base (eNB#1) utilisé dans un système de communication mobile mettant en oeuvre des communications en faisant appel à tout ou partie d'une largeur de bande de système, l'appareil de station de base comprenant :
une partie (510, 512) destinée à recevoir un signal de demande demandant un transfert intercellulaire entre des largeurs de bande à partir d'un équipement d'utilisateur (UE) ;
une partie (510) destinée à transmettre un signal d'instruction à une ou plusieurs stations de base périphériques qui représentent des stations candidates à une destination de transfert intercellulaire (eNB#2) selon le signal de demande ; et
une partie (510) destinée à recevoir un signal de réponse en réponse au signal d'instruction en provenance d'une ou plusieurs stations de base périphériques (eNB#2) ;
**caractérisé en ce qu'**il comprend en outre :
une partie (510) destinée à transmettre un signal de commande individuel à l'équipement d'utilisateur selon le signal de réponse, le signal de commande individuel incluant au moins des informations de fréquence d'un signal de mesure de canal de la station candidate à une destination de transfert intercellulaire (eNB#2) ;
dans lequel les informations de fréquence indiquent une fréquence à utiliser pour une mesure de canal devant être mise en oeuvre par l'équipement d'utilisateur (UE) relativement à ladite une ou auxdites plusieurs stations de base périphériques (eNB#2) ; et
dans lequel le signal d'instruction transmis par l'appareil de station de base (eNB#1) à ladite une ou auxdites plusieurs stations de base périphériques (eNB#2) est un signal destiné à amener ladite une ou lesdites plusieurs stations de base périphériques (eNB#2) à transmettre le signal de mesure de canal à l'équipement d'utilisateur (UE), à la fréquence indiquée dans les informations de fréquence.

2. Appareil de station de base (eNB#1) selon la revendication 1, **caractérisé en ce que** les informations de fréquence du signal de mesure de canal transmis à partir de chaque station parmi ladite une ou lesdites plusieurs stations de base périphériques (eNB#2) sont connues avant la réception du signal de demande.

3. Appareil de station de base (eNB#1) selon la revendication 1, **caractérisé en ce que** les informations de fréquence du signal de mesure de canal transmis à partir de chaque station parmi ladite une ou lesdites plusieurs stations de base périphériques (eNB#2) ne sont pas connues avant la réception du signal de demande.

4. Appareil de station de base (eNB#1) selon la revendication 1, **caractérisé en ce que** le signal de commande individuel inclut les informations de fréquence et des informations de temporisation de transmission du signal de mesure de canal.

5. Appareil de station de base (eNB#1) selon la revendication 1, **caractérisé en ce que** plusieurs blocs de fréquence sont inclus dans la largeur de bande de système, dans lequel chacun des blocs de fréquence inclut une pluralité de blocs de ressources de fréquence, dans lequel l'appareil de station de base est configuré de manière à affecter un ou plusieurs blocs parmi les blocs de ressources de fréquence dans le bloc de fréquence affecté à l'équipement d'utilisateur (UE).

6. Appareil de station de base (eNB#1) selon la revendication 1, **caractérisé en ce que** des informations indiquant une cellule en cours de l'équipement d'utilisateur (UE) sont incluses dans le signal de demande.

7. Appareil de station de base (eNB#1) selon la revendication 4, **caractérisé en ce que** les informations de temporisation de transmission indiquent que le signal de mesure de canal est transmis par voie hertzienne au cours d'une période prédéterminée intermittente.

8. Procédé utilisé par un appareil de station de base (eNB#1) d'un système de communication mobile mettant en oeuvre des communications en faisant appel à tout ou partie d'une largeur de bande de système, le procédé comprenant :
une étape consistant à recevoir un signal de demande (S11) demandant un transfert intercellulaire entre des largeurs de bande à partir d'un équipement d'utilisateur ;
une étape consistant à transmettre un signal d'instruction (S22) à une ou plusieurs stations de base périphériques qui représentent des stations candidates à une destination de transfert intercellulaire selon le signal de demande ; et
une étape consistant à recevoir un signal de réponse (S321) en réponse au signal d'instruction en provenance d'une ou plusieurs stations de base périphériques ;
**caractérisé en ce qu'**il comprend en outre :
une étape consistant à transmettre un signal de commande individuel (S24) à l'équipement d'utilisateur selon le signal de réponse, le signal de commande individuel incluant au moins des informations de fréquence d'un signal de mesure de canal de la station candidate à une destination de transfert intercellulaire ;
dans lequel les informations de fréquence indiquent une fréquence à utiliser pour une mesure de canal devant être mise en oeuvre par l'équipement d'utilisateur (UE) relativement à ladite une ou auxdites plusieurs stations de base périphériques (eNB#2) ; et
dans lequel le signal d'instruction transmis par l'appareil de station de base (eNB#1) à ladite une ou auxdites plusieurs stations de base périphériques (eNB#2) est un signal destiné à amener ladite une ou lesdites plusieurs stations de base périphériques (eNB#2) à transmettre le signal de mesure de canal à l'équipement d'utilisateur (UE), à la fréquence indiquée dans les informations de fréquence.

9. Appareil de station de base (eNB#2) utilisé dans un système de communication mobile mettant en oeuvre des communications en faisant appel à tout ou partie d'une largeur de bande de système, l'appareil de station de base comprenant :
une partie (510) destinée à recevoir un signal d'instruction (S22), en provenance d'une station de base d'origine de transfert (eNB#1), d'un transfert intercellulaire occasionné par une demande de transfert intercellulaire entre des largeurs de bande en provenance d'un équipement d'utilisateur (UE) ; et
une partie (510) destinée à transmettre un signal de réponse selon le signal d'instruction, de sorte qu'au moins des informations de fréquence d'un signal de mesure de canal (S33) sont notifiées à l'équipement d'utilisateur dans un signal de commande individuel (S24) transmis à partir de la station de base d'origine de transfert (eNB#1) ;
**caractérisé en ce qu'**il comprend en outre :
une partie (510) destinée à transmettre le signal de mesure de canal à l'équipement d'utilisateur (UE) à une fréquence des informations de fréquence, en réponse au signal d'instruction reçu à partir de la station de base d'origine de transfert (eNB#1).

10. Appareil de station de base (eNB#2) selon la revendication 9, **caractérisé en ce que** l'appareil de station de base (eNB#2) est en outre configuré de manière à rechercher une ressource sans fil du signal de mesure de canal, dans lequel des informations indiquant la ressource sans fil déterminée selon un résultat de la recherche sont incluses dans le signal de réponse.

11. Appareil de station de base (eNB#2) selon la revendication 9, **caractérisé en ce que** le signal de réponse inclut les informations de fréquence et des informations de temporisation de transmission du signal de mesure de canal.

12. Appareil de station de base (eNB#2) selon la revendication 11, **caractérisé en ce que** les informations de temporisation de transmission indiquent que le signal de mesure de canal est transmis par voie hertzienne au cours d'une période prédéterminée intermittente.

13. Procédé utilisé par un appareil de station de base (eNB#2) d'un système de communication mobile mettant en oeuvre des communications en faisant appel à tout ou partie d'une largeur de bande de système, le procédé comprenant :
une étape consistant à recevoir un signal d'instruction (S22), en provenance d'une station de base d'origine de transfert (eNB#1), d'un transfert intercellulaire occasionné par une demande de transfert intercellulaire entre des largeurs de bande en provenance d'un équipement d'utilisateur (UE) ; et
**caractérisé en outre en ce qu'**il comporte :
une étape consistant à transmettre un signal de réponse (S321) selon le signal d'instruction, de sorte qu'au moins des informations de fréquence d'un signal de mesure de canal sont notifiées à l'équipement d'utilisateur (UE) dans un signal de commande individuel (S24) transmis à partir de la station de base d'origine de transfert (eNB#1) ; et
une étape consistant à transmettre le signal de mesure de canal (S33) à l'équipement d'utilisateur (UE), à une fréquence des informations de fréquence, en réponse au signal d'instruction.

14. Équipement d'utilisateur (UE) utilisé dans un système de communication mobile mettant en oeuvre des communications en faisant appel à tout ou partie d'une largeur de bande de système, l'équipement d'utilisateur comprenant :
une partie (406) destinée à transmettre un signal de demande demandant un transfert intercellulaire entre des largeurs de bande, à une station de base d'origine de transfert du transfert intercellulaire ;
**caractérisé en ce qu'**il comprend en outre :
une partie (406) destinée à recevoir un signal de commande individuel (S24), incluant au moins des informations de fréquence d'un signal de mesure de canal (S33) d'une ou plusieurs stations de base périphériques qui représentent des stations candidates à une destination de transfert intercellulaire, en provenance de la station de base d'origine de transfert (eNB#1) ; et
une partie destinée à recevoir le signal de mesure de canal à une fréquence des informations de fréquence en provenance d'une ou plusieurs stations de base périphériques (eNB#2) qui représentent des stations candidates à une destination de transfert intercellulaire ;
dans lequel les informations de fréquence indiquent une fréquence à utiliser pour une mesure de canal devant être mise en oeuvre par l'équipement d'utilisateur (UE) relativement à ladite une ou auxdites plusieurs stations de base périphériques (eNB#2) ; et
dans lequel l'équipement d'utilisateur est exploitable de manière à mettre en oeuvre la mesure de canal en utilisant le signal de mesure de canal (S33) transmis à partir de ladite une ou desdites plusieurs stations de base périphériques (eNB#2) à la fréquence indiquée dans les informations de fréquence dans le signal de commande individuel reçu par l'équipement d'utilisateur (UE) à partir de la station de base d'origine de transfert (eNB#1).

15. Équipement d'utilisateur (UE) selon la revendication 14, **caractérisé en ce que** le signal de commande individuel inclut les informations de fréquence et des informations de temporisation de transmission du signal de mesure de canal.

16. Équipement d'utilisateur (UE) selon la revendication 14, **caractérisé en ce que** des informations indiquant une cellule en cours de l'équipement d'utilisateur sont incluses dans le signal de demande.

17. Équipement d'utilisateur (UE) selon la revendication 15, **caractérisé en ce que** les informations de temporisation de transmission indiquent que le signal de mesure de canal est transmis par voie hertzienne au cours d'une période prédéterminée intermittente.

18. Procédé utilisé par un équipement d'utilisateur (UE) d'un système de communication mobile mettant en oeuvre des communications en faisant appel à tout ou partie d'une largeur de bande de système, le procédé comprenant :
une étape consistant à transmettre un signal de demande (S11) demandant un transfert intercellulaire entre des largeurs de bande à la station de base d'origine de transfert (eNB#1) du transfert intercellulaire ;
une étape consistant à recevoir un signal de commande individuel (S24), incluant au moins des informations de fréquence d'un signal de mesure de canal (S33) d'une ou plusieurs stations de base périphériques qui représentent des stations candidates à une destination de transfert intercellulaire, en provenance de la station de base d'origine de transfert (eNB#1) ; et
**caractérisé par** :
une étape consistant à recevoir le signal de mesure de canal à une fréquence des informations de fréquence à partir d'une ou plusieurs stations de base périphériques (eNB#2) qui représentent des stations candidates à une destination de transfert intercellulaire ;
dans lequel les informations de fréquence indiquent une fréquence à utiliser pour une mesure de canal devant être mise en oeuvre par l'équipement d'utilisateur (UE) relativement à ladite une ou auxdites plusieurs stations de base périphériques (eNB#2) ; et
dans lequel la mesure de canal est mise en oeuvre dans l'équipement d'utilisateur (UE) en utilisant le signal de mesure de canal (S33) transmis à partir de ladite une ou desdits plusieurs stations de base périphériques (eNB#2) à la fréquence indiquée dans les informations de fréquence dans le signal de commande individuel reçu par l'équipement d'utilisateur (UE) à partir de la station de base d'origine de transfert (eNB#1).

19. Système de communication mobile comprenant :
un équipement d'utilisateur (UE) selon l'une quelconque des revendications 14 à 17 ;
une première station de base (eNB#1) selon l'une quelconque des revendications 1 à 7 ; et
une seconde station de base (eNB#2) selon l'une quelconque des revendications 9 à 12.
